# EUROPEAN PATENT APPLICATION

(11) **EP 3 131 045 A1**
(43) Date of publication of application: **15.02.2017**
(21) Application number: 16153827.7
(22) Date of filing: 02.02.2016
(51) Int. Cl.: G06Q 20/34

(54) **CREDIT LIMIT MANAGEMENT SYSTEM AND METHOD**

(30) Priority: 13.08.2015 IN 3059MU2015
(71) Applicant: Tata Consultancy Services Limited, Maharashtra (IN)
(72) Inventor: KALIMUTHU, Nelliyan, 600058 Chennai, Tamil Nadu (IN); MANI, Jayasekr, 600058 Chennai, Tamil Nadu (IN); PONNAN, Sureshbabu, 600073 Chennai, Tamil Nadu (IN); VADIVEL, Padmanaban, 600097 Chennai, Tamil Nadu (IN)
(74) Representative: Goddar, Heinz J.

(57) **Abstract**

A computer implemented system and method, comprising: a memory storing instructions; and a processor configured by the instructions to: determine, during a billing period, an unused credit limit in a fixed credit limit for the current month, the unused credit limit and the fixed credit limit are unique and specific to a payment card, obtain parameters specific to the payment card comprising at least one of an account parameter, a policy parameter provided by a payment card issuing authority, a payment parameter, a spending factor, and a fiscal parameter, compute a credit limit adjustment score based on the parameters and the unused credit limit, and set the fixed credit limit to a credit limit for a succeeding month based on at least a portion of the unused credit limit, the set of parameters and the credit limit adjustment score.

## Description

### CROSS-REFERENCE TO RELATED APPLICATIONS AND PRIORITY

This patent application claims priority to India Patent Application 3059/MUM/2015, filed on August 13,2015, the entirety of which is hereby incorporated by reference.

### TECHNICAL FIELD

The embodiments herein generally relate to payment cards management systems, and, more particularly, to credit limit management system and method for payment cards.

### BACKGROUND

Currently, financial institutions or credit card issuing authorities issue credit cards and set limits for these credit cards based on information obtained during an application made by an applicant. These credit limits are broadly arrived by analyzing the parameters such as employment/ business factors, personal factors and overall credit history across customer financials. The prime challenge in the process for credit card issuing authorities/consortium that still remains is to make an optimum use of the earmarked credit limit which is not effectively utilized by the customer. Typically, customers are identified and provided an enhanced credit limit on the basis of their credit card track record.

Further, in a scenario, where customers are likely to exceed the credit limits set by the issuing authorities, customers have to initiate a special request for an incremental credit limit, which undergoes scrutiny and a multi-process verification prior to granting an increase in credit limit. Furthermore, these financial institutions or the issuing authorities set a target (be it annually, quarterly, or biannually) for issuing credit cards with predefined credit limits, and for increasing the credit limit. Given the volumes of credit cards being issued and generating of billing statements, it is a time consuming and a daunting task for the financial institutions or credit card issuing authorities for enhancing the credit limit. Thus, there remains a trade-off in enhancing the credit limits and enabling the customer satisfaction.

### SUMMARY

The following presents a simplified summary of some embodiments of the disclosure in order to provide a basic understanding of the embodiments. This summary is not an extensive overview of the embodiments. It is not intended to identify key/critical elements of the embodiments or to delineate the scope of the embodiments. Its sole purpose is to present some embodiments in a simplified form as a prelude to the more detailed description that is presented below.

In view of the foregoing, an embodiment herein provides a computer implemented system. The computer implemented system, comprising: a memory storing instructions; and a processor coupled to the memory, wherein the processor is configured by the instructions to: determine, during a billing period of a current month, an unused credit limit in a fixed credit limit for the current month; wherein the unused credit limit and the fixed credit limit are unique and specific to a payment card associated with a user, obtain a set of parameters comprising information specific to the payment card and the user, wherein the specific information comprises at least one of an account parameter, a policy parameter provided by a payment card issuing authority, a payment parameter, a spending factor, and a fiscal parameter, compute a credit limit adjustment score based on the set of parameters and the unused credit limit, and set the fixed credit limit to a credit limit for a succeeding month based on at least one of a portion of the unused credit limit, the set of parameters and the credit limit adjustment score.

The credit limit adjustment score computed based on the set of parameters and the unused credit limit further comprises evaluating a transaction history of the payment card associated with the user. The credit limit for the succeeding month is greater than the fixed credit limit. The credit limit for the succeeding month is lesser than the fixed credit limit. The credit limit for the succeeding month is equal to the fixed credit limit. The account parameter comprises an account identifier that is unique and specific to the payment card, the transaction history of the payment card. The information associated with the user comprises at least one of an age, an occupation, and a geographical location. The policy parameter comprises at least one of a regulatory norm provided by regulatory body, the transaction history, information specific to one or more services subscribed using the payment card. The payment parameter comprises information specific to the payment card and the user are obtained for at least one of the current month and one or more previous months. The fixed credit limit is a credit limit that is determined during an issuance of the payment card. The fixed credit limit may be a revised permanent credit limit maintained by the card issuing authority basis a request from a customer.

In another aspect, a computer implemented method is provided. The computer implemented method comprising determining, during a billing period of a current month, an unused credit limit in a fixed credit limit for the current month; wherein the unused credit limit and the fixed credit limit are unique and specific to a payment card associated with a user; obtaining a set of parameters comprising information specific to the payment card and the user, wherein the information comprises at least one of an account parameter, a policy parameter provided by a payment card issuing authority, a payment parameter, a spending factor, and a fiscal parameter, computing a credit limit adjustment score based on the set of parameters and the unused credit limit; and setting the fixed credit limit to a credit limit for a succeeding month based on at least one of a portion of the unused credit limit, the set of parameters and the credit limit adjustment score.

The computing of the credit limit adjustment score that is based on the set of parameters and the unused credit limit further comprises evaluating a transaction history of the payment card associated with the user. The credit limit for the succeeding month is greater than the fixed credit limit. The credit limit for the succeeding month is less than the fixed credit limit. The credit limit for the succeeding month is equal to the fixed credit limit. The policy parameter comprises at least one of a regulatory norm provided by regulatory body, the transaction history, information specific to one or more services subscribed using the payment card. The payment parameter comprises information specific the payment card and the user are obtained for at least one of the current month and one or more previous months. The fixed credit limit is a credit limit that is determined during an issuance of the payment card. The fixed credit limit may be a revised permanent credit limit maintained by the card issuing authority basis a request from a customer.

In yet another aspect, one or more non-transitory machine readable information storage mediums comprising one or more instructions, which when executed by one or more hardware processors causes adjusting a fixed credit limit to a credit limit by performing the step of: determining, during a billing period of a current month, an unused credit limit in a fixed credit limit for the current month; wherein the unused credit limit and the fixed credit limit are unique and specific to a payment card associated with a user; obtaining a set of parameters comprising information specific to the payment card and the user, wherein the information comprises at least one of an account parameter, a policy parameter provided by a payment card issuing authority, a payment parameter, a spending factor, and a fiscal parameter, computing a credit limit adjustment score based on the set of parameters and the unused credit limit; and setting the fixed credit limit to a credit limit for a succeeding month based on at least one of a portion of the unused credit limit, the set of parameters and the credit limit adjustment score.

The computing of the credit limit adjustment score that is based on the set of parameters and the unused credit limit further comprises evaluating a transaction history of the payment card associated with the user. The credit limit for the succeeding month is greater than the fixed credit limit. The credit limit for the succeeding month is less than the fixed credit limit. The credit limit for the succeeding month is equal to the fixed credit limit. The policy parameter comprises at least one of a regulatory norm provided by regulatory body, the transaction history, information specific to one or more services subscribed using the payment card. The payment parameter comprises information specific the payment card and the user are obtained for at least one of the current month and one or more previous months. The fixed credit limit is a credit limit that is determined during an issuance of the payment card. The fixed credit limit may be a revised permanent credit limit maintained by the card issuing authority basis a request from a customer.

It should be appreciated by those skilled in the art that any block diagram herein represent conceptual views of illustrative systems embodying the principles of the present subject matter. Similarly, it will be appreciated that any flow charts, flow diagrams, state transition diagrams, pseudo code, and the like represent various processes which may be substantially represented in computer readable medium and so executed by a computing device or processor, whether or not such computing device or processor is explicitly shown.

### BRIEF DESCRIPTION OF THE DRAWINGS

The embodiments herein will be better understood from the following detailed description with reference to the drawings, in which:
FIG. 1 illustrates a block diagram of a payment card system communicating with one or more user devices through a network according to an embodiment of the present disclosure;
FIG. 2 is a block diagram of the payment card system of FIG. 1 according to an embodiment of the present disclosure; and
FIG. 3 is a flow diagram illustrating a computer implemented method for setting a credit limit for a succeeding month according to an embodiment of the present disclosure.

### DETAILED DESCRIPTION OF EMBODIMENTS

The embodiments herein and the various features and advantageous details thereof are explained more fully with reference to the non-limiting embodiments that are illustrated in the accompanying drawings and detailed in the following description. The examples used herein are intended merely to facilitate an understanding of ways in which the embodiments herein may be practiced and to further enable those of skill in the art to practice the embodiments herein. Accordingly, the examples should not be construed as limiting the scope of the embodiments herein.

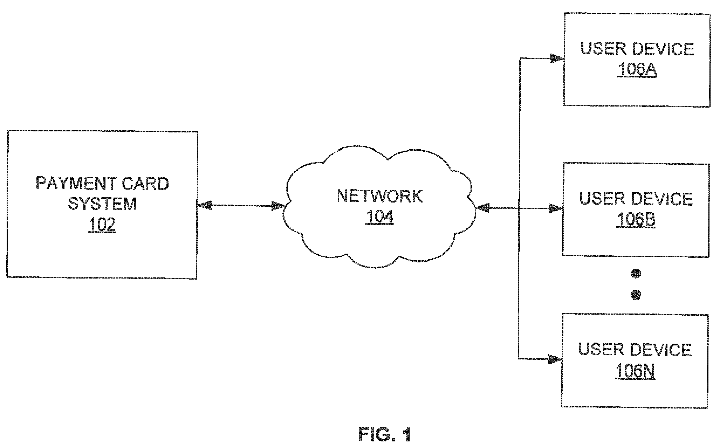

Referring now to the drawings, and more particularly to FIGS. 1 through 3, where similar reference characters denote corresponding features consistently throughout the figures, there are shown preferred embodiments and these embodiments are described in the context of the following exemplary system and/or method.

FIG. 1 illustrates a block diagram of a payment card system 102 communicating with one or more user devices 106A-N through a network 104 according to an embodiment of the present disclosure. The payment card system 102 identifies select payment cards (e.g., a credit card or similar financial instruments) and determines an unused portion of a credit limit for a particular period (e.g., a current month), and adjusts the credit limit for a succeeding period (e.g., a succeeding month). The credit limit is set to a new credit limit based on predetermined criteria (e.g., one or more parameters). The network 104 comprises, but is not limited to, wired networks, for example, LAN, cable, etc., and wireless networks, such as WLAN, cellular, or satellite. The one or more user devices 106A-N comprise, but are not limited to, a mobile communication device, a laptop, a palmtop, a personal computer (PC), a tablet PC, and so on. The one or more user devices 106A-N are associated with one or more users (not shown in FIG. 1). The payment card system 102 comprises, but is not limited to at least one of a server, a financial institution system, an issuing authority system, an issuing authority server, and any computing device that is capable of obtaining information specific to a payment card specific to a user (e.g., a customer), and computing a credit limit adjustment score, and thereby setting the credit limit of the payment card to a new limit.

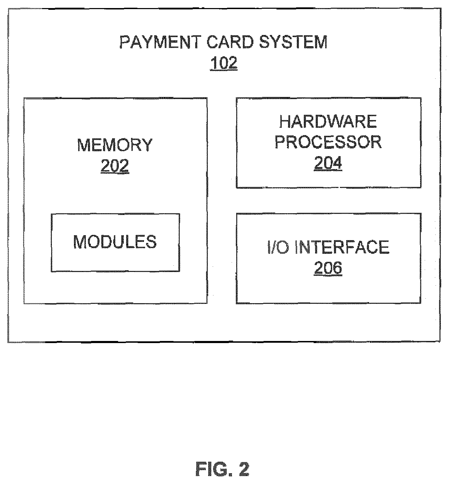

FIG. 2, with reference to FIG. 1, is a block diagram of the payment card system 102 according to an embodiment of the present disclosure. The payment card system 102 comprises a memory 202, a hardware processor 204, and an input/output (I/O) interface 206. The memory 202 may further include one or more modules. The memory 202, the hardware processor 204, the input/output (I/O) interface 206, and/or the modules may be coupled by a system bus or a similar mechanism.

The memory 202, may store instructions, any number of pieces of information, and data, used by a computer system, for example the payment card system 102 to implement the functions of the payment card system 102. The memory 202 may include for example, volatile memory and/or non-volatile memory. Examples of volatile memory may include, but are not limited to volatile random access memory (RAM). The non-volatile memory may additionally or alternatively comprise an electrically erasable programmable read only memory (EEPROM), flash memory, hard drive, or the like. Some examples of the volatile memory includes, but are not limited to, random access memory, dynamic random access memory, static random access memory, and the like. Some example of the non-volatile memory includes, but are not limited to, hard disks, magnetic tapes, optical disks, programmable read only memory, erasable programmable read only memory, electrically erasable programmable read only memory, flash memory, and the like. The memory 202 may be configured to store information, data, applications, instructions or the like for enabling the payment card system 102 to carry out various functions in accordance with various example embodiments. Additionally or alternatively, the memory 202 may be configured to store instructions which when executed by the hardware processor 204 causes the payment card system to behave in a manner as described in various embodiments (e.g., identifying select customers/one or more users from a group of users for adjusting a credit limit to another credit limit for a succeeding month based on the information). The memory 202 stores information for example, information comprising at least one of an account parameter, a policy parameter provided by a payment card issuing authority, a payment parameter, a spending factor, and a fiscal parameter, and so on. The information may further comprise transaction history, spending pattern (e.g., spending in an unnatural way) and so on.

The hardware processor 204 may be implemented as one or more microprocessors, microcomputers, microcontrollers, digital signal processors, central processing units, state machines, logic circuitries, and/or any devices that manipulate signals based on operational instructions. Further, the hardware processor 204 may comprise a multi-core architecture. Among other capabilities, the hardware processor 204 is configured to fetch and execute computer-readable instructions or modules stored in the memory 202. The hardware processor 204 may include circuitry implementing, among others, audio and logic functions associated with the communication. For example, the hardware processor 204 may include, but are not limited to, one or more digital signal processors (DSPs), one or more microprocessor, one or more special-purpose computer chips, one or more field-programmable gate arrays (FPGAs), one or more application-specific integrated circuits (ASICs), one or more computer(s), various analog to digital converters, digital to analog converters, and/or other support circuits. The hardware processor 204 thus may also include the functionality to encode messages and/or data or information. The hardware processor 204 may include, among other things, a clock, an arithmetic logic unit (ALU) and logic gates configured to support operation of the hardware processor 204. Further, the hardware processor 204 may include functionality to execute one or more software programs, which may be stored in the memory 202 or otherwise accessible to the hardware processor 204.

The hardware processor 204 is configured to determine, during a billing period of a current month (e.g., July 2015), an unused credit limit in a fixed credit limit for the current month. The unused credit limit and the fixed credit limit are unique and specific to a payment card associated with a user. The fixed credit limit is a credit limit that is determined during an issuance of the payment card by any issuing authority. For example, when a payment card is issued by an issuing authority for a user such as John Doe, a fixed credit limit may set by an issuing authority (e.g., XYZ financial institution). The fixed limit may be 1,50,000 INR (or 2362.48 USD) that could be utilized by the user each month. Assuming the user utilizes 1,25,000 INR (e.g., 1968.74 USD) for the month of July towards groceries, medical emergencies, educational, entertainment, hospitality, and so on. The payment card system 102 determines the unused credit limit (e.g., 25,000 INR or 393.75 USD) in this case.

The hardware processor 204 further obtains a set of parameters comprising information specific to the payment card and the user stored in the memory 202. The specific information comprises at least one of an account parameter, a policy parameter provided by a payment card issuing authority, a payment parameter, a spending factor, a fiscal parameter, and so on, in one example embodiment. The account parameter comprises an account identifier (e.g., an account number such as 027485957239) that is unique and specific to the payment card, the transaction history of the payment card and the user (e.g., John Doe). The information associated with the user comprises at least one of an age, an occupation, a geographical location, and so on. The policy parameter comprises at least one of a regulatory norm provided by regulatory body, the transaction history, information specific to one or more services subscribed using the payment card. The payment card system 102 may also consider into account the one or more services to determine or compute the credit limit adjustment score. The one or more services may comprises request for services related to financial securities, for example, debt securities, (e.g., banknotes, bonds and debentures), equity securities, (e.g., common stocks in a stock market), money market securities (e.g., treasury bills), and other instruments representing the right to receive future benefits, etc., in one example embodiment. Other financial securities comprises derivatives, (e.g., forwards, futures, options and swaps), and so on. The fiscal parameters comprise, but are not limited to, regulatory body such as RBI, and for stock market it could be Credit Information Bureau Limited (CIBIL).

Similarly, the payment parameter comprises information specific to the payment card and the user and is obtained for at least one of the current month and one or more previous months. For example, the payment pattern made to a financial institution (or a payment card issuing authority) may be identified and such information may be obtained for one or more previous months. For example, when a billing period is due on July, 2015, the spending pattern or the payment made for the one or more previous months (e.g., January 2015, February 2015, March 2015, April 2015, May 2015, and June 2015) may be obtained.

The hardware processor 204 further computes a credit limit adjustment score based on the set of parameters and the unused credit limit. For example, the set of parameters is used on the unused credit limit (e.g., 25,000 INR or 393.75 USD) for the July month. The payment card system 102 computes the credit limit adjustment score based on the set of parameters and the unused credit limit by evaluating a transaction history of the payment card associated with the user. For example, the credit limit adjustment score may be computed on the unused credit limit (e.g., 25,000 INR or 393.75 USD) using the set of parameters. The payment card system 102 further sets the fixed credit limit to a credit limit (e.g., a new credit limit) for a succeeding month (e.g., August, 2015) based on at least a portion of the unused credit limit, the set of parameters and the credit limit adjustment score. The new credit limit may be 'x' portion (e.g., 12,000 INR or 189.00 USD) of the unused credit limit.

Furthermore, the payment card system 102 accounts the one or more services subscribed by the user to compute the credit limit adjustment score, and accordingly compute a credit limit based on which the fixed credit limit for a succeeding month is set (e.g., increase or decrease in the fixed credit limit). The one or more services subscribed by the user may be specific to one payment card, in one example embodiment. The one or more services subscribed by the user may be specific to two or more payment cards issued by one or more issuing authorities, in one example embodiment. For example, stocks may be issued by a first issuing authority (or a first financial institution), and loans on credit card, or loan on an account may be issued by a second issuing authority (or a second financial institution). The first issuing authority and the second issuing authority are different from each other. For instance, the first issuing authority may be ABC Bank, and the second issuing authority may be XYZ Bank. The stocks profit or loss, and the payments (regular or irregular payments made to the banks) on the loan issued may be the parameters/factors considered for setting the fixed credit limit to a new credit limit for a succeeding month.

The new credit limit that is set for the succeeding month is greater than the fixed credit limit, in one example embodiment. The new credit limit for the succeeding month is lesser than the fixed credit limit, in another example embodiment. For example, when the user is identified as a defaulter, or a non-regular customer in making payments, the new credit limit may be a decreased amount of the actual fixed credit limit. For instance, assuming that the user has subscribed to debt services (or a loan for medical emergency or for buying a property), in such a scenario, the new credit limit that is set to the payment card, may be equal to the same credit limit as set during an issuance of the payment card by the issuing authority. Similarly, the new credit limit that is set to the payment card, may be lesser (e.g., 95,000 INR or 1496.24 USD for August, 2015) than the actual credit limit (1,50,000 INR or 2362.48 USD) set during an issuance of the payment card by the issuing authority. The increase or decrease in the new credit limit may be extended to subsequent months, in one example embodiment. For example, if the fixed credit limit (1,50,000 INR or 2362.48 USD) is increased to 1,75,000 INR (or 2756.23 USD) for the succeeding month, the financial institution may allow the customer to use the increased portion (e.g., 25,000 INR or 393.75 USD) for the next two or more succeeding months. For instance, when the increased portion (e.g., 25,000 INR or 393.75 USD) is notified to the customer for succeeding month (e.g., August 2015), the customer may be notified to use the increased portion 25,000 INR or 393.75 USD either for August month alone, or extend it till September 2015, or any subsequent months.

In some scenarios, the credit limit for the succeeding month is equal to the fixed credit limit, in yet another example embodiment. Based on the new credit limit set to the payment card, the payment card system 102 may then notify the user through one or more communication channels using the network 104. The one or more communication channels comprise, but are not limited to, a short messaging service (SMS) channel, a multimedia messaging service, and so on. Such notifications may include one or more promotional offers for the succeeding month. At any moment, the payment card system 102 may terminate the services (e.g., setting the actual credit limit to a new credit limit), with or without prior notice to the user. Alternatively, the payment card system 102 automatically suggest revision (increase / decrease) of the permanent credit limit. In other words, the payment card system 102 dynamically adjusts (or sets/configures) the fixed credit limit to a credit limit (an increase / a decrease of the permanent credit limit) for a succeeding month based on at least one of a portion of the unused credit limit of the fixed credit limit for a current month, the credit limit adjustment score, and/or the set of obtained parameters.

Further, the payment card system 102 may prioritize a sub-set of customers/users from a set of users/payment cards for a given month. For example, when a group of payment cards (payment card 1, payment card 2, payment card 3, and so on) are processed during a billing period to determine an unused credit limit from the fixed credit limits of these payment cards, the payment card system 102 may prioritize (e.g., using a prioritization module) payment card 2 over the payment cards 1 and 3 for adjusting (or configuring) the fixed credit limit of the payment card 2 to a new credit limit for a succeeding month. The prioritization may vary and depend upon the set of parameters as described above and other criteria. For example, other criteria may include, wherein different customers are provided with different promotional offers for a current month. In such a scenario, the payment card system 102 may prioritize based on the best promotional offers provided to particular card holder (e.g., in this case, the customer associated with the payment card 2), and how unutilized or how effectively is the promotional offer utilized by this customer. For instance, if a promotional code of 30% discount on merchandise is provided only to the payment card 2 for a previous month.

The payment card system 102 may also determine during the current month, whether this promotional discount was utilized by that particular customer, and accordingly prioritize and adjust the credit limit for the succeeding month. For example, if the promotional discount is utilized, the payment card system 102 may prioritize payment card 2 over the payment cards 1 and 3. These promotional codes (or discounts) may be provided to customers in addition to an increase or a decrease in the fixed credit limit. In case, where all the card holders are provided promotional codes, and are utilized by the card holders in a previous month, the payment card system 102 may take selective decisions and prioritize accordingly for setting the fixed credit limit of the payment cards to a new credit limit respectively.

Furthermore, the payment card system 102 may configure a threshold score (e.g., a range of scores). The payment card system 102 when computes the credit limit adjustment score, the payment card system 102 may compare the credit limit adjustment score with the threshold score. And based on the comparison between the credit limit adjustment score and the threshold score, the payment card system 102 sets the fixed credit limit to a new credit limit. For instance, the threshold score may have a range of scores such as from 70 to 85. When the credit limit adjustment score lies within the range (e.g., between 70 to 85), the fixed credit limit may be accordingly adjusted to an 'x' portion of the unused credit limit. For example, if the unused credit limit is (e.g., 25,000 INR or 393.75 USD), then 'x' portion of the unused credit limit (e.g., 25,000 INR or 393.75 USD) could be at least a portion of the unused credit limit (e.g., 20,000 INR or 314.597 USD). In another example, the 'x' portion could be the unused credit limit itself (e.g., 25,000 INR or 393.75 USD). Alternatively, the threshold score may not include a range. For example, when the threshold score is 75, and the credit limit adjustment score that is computed based on the set of parameters (or services subscribed by the user) is 69, then the fixed credit limit may be set to a new credit limit. The new credit limit may be either greater than, less than, or equal to the fixed credit limit. For instance, the new credit limit for the succeeding month could be either >= 1,50, 000 INR or 2362.48 USD. In another instance, the new credit limit for the succeeding month could be either <= 1,50, 000 INR or 2362.48 USD. The threshold score is preconfigured at the time of issuance of the payment card by the issuing authority, in one example embodiment. The threshold score is dynamically computed each time during a billing period for every current month, and based on the dynamically computed threshold score, the credit limit adjustment score may be computed accordingly. And based on this credit limit adjustment score, the fixed credit limit may be set to a new credit limit.

Alternatively, the payment card system 102 may execute the modules comprising a determining module that when executed by the hardware processor 204 determines during (or while or in) a billing period of a current month, an unused credit limit in a fixed credit limit for the current month. Similarly, the payment card system 102 comprises a parameter set obtaining module that when executed by the hardware processor 204 obtains the set of parameters (as described above) comprising information specific to the payment card and the user stored in the memory 202. The payment card system 102 further comprises a computation module (also referred herein as a credit limit adjustment score computation module) that when executed by the hardware processor 204 computes an adjustment score (e.g., a credit limit adjustment score for the payment card) based on the set of obtained parameters and the unused credit limit in the current month. The payment card system 102 further comprises a credit limit adjustment module that when executed by the hardware processor 204 adjusts (or sets) the fixed credit limit to a credit limit (e.g., a new credit limit) for a succeeding month based on at least one of a portion of the unused credit limit, the set of parameters and the credit limit adjustment score.

The payment card system 102 further comprises a threshold score computation module that computes a threshold score in real time, or near real time. The threshold score computation module may compute the threshold score when the payment card is issued to a customer, or compute during each billing period. Alternatively, the threshold score may be computed periodically, and used as a fixed threshold score for a predetermined time interval. For instance, when a first threshold score is computed, the first threshold score may be used for the first three months, and then the payment card system 102 may compute a credit limit adjustment score for each billing period. The first threshold score may be used to compare with the computed credit limit adjustment score, based on which the fixed credit limit may be set to a new credit limit for a succeeding month using the set of parameters, and the unused portion of the fixed credit limit of the current month. Similarly, a second threshold score can be computed (or is computed) for a subsequent predetermined time interval (e.g., the next three months), and similar steps may be followed to set the fixed credit limit to a new credit limit for each month from the next three months. Alternatively, a single threshold score may be computed by the payment card system 102 and utilized until the service is terminated by either parties (e.g., the financial institution and/or the customer). Furthermore, the threshold score may be set or preconfigured based on a range selection obtained from a user (e.g., an employee from a payment card issuing authority). In one example embodiment, the threshold score may be preconfigured by a regulatory body (e.g., Government entity or CIBIL).

The payment card system 102 includes a self-learning module that when executed by the hardware processor 204 automatically identifies select customers/payment cards based on the set of parameters and adjusts the fixed credit limit to a new credit limit for a succeeding without a human intervention (or any inputs from a user or third party).

The modules such as, but are not limited to, the determining module, the parameters obtaining module, the computational module, the adjustment module, the prioritization module, the threshold score computation module, and the self-learning module are implemented as at least one of a logically self-contained part of a software program, a self-contained hardware component, and/or, a self-contained hardware component, with a logically self-contained part of a software program embedded into each of the hardware component that when executed perform the above method described herein, in one embodiment.

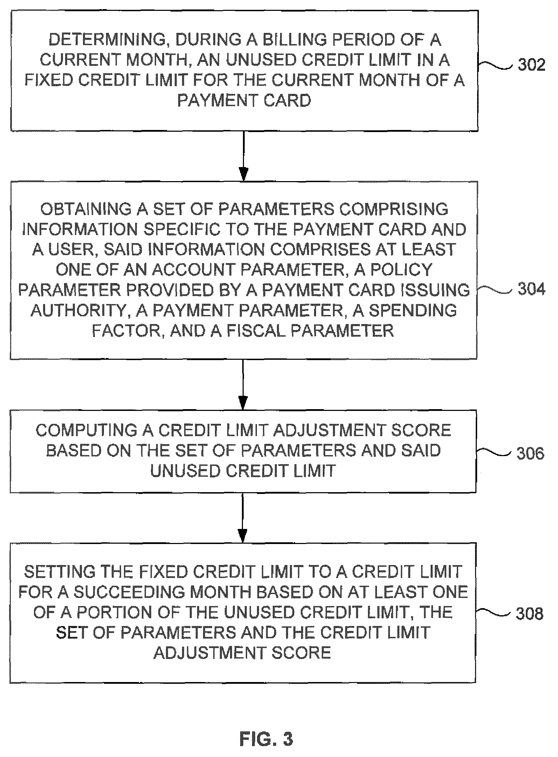

FIG. 3, with reference to FIGS. 1-2, is a flow diagram illustrating a computer implemented method for setting a credit limit for a succeeding month according to an embodiment of the present disclosure. In step 302, an unused credit limit in a fixed credit limit is determined during a billing period of a current month. The unused credit limit and the fixed credit limit are unique and specific to a payment card associated with a user. The fixed credit limit is a credit limit that is determined during an issuance of the payment card.

In step 304, a set of parameters comprising information specific to the payment card and the user are obtained. The information comprises at least one of an account parameter, a policy parameter provided by a payment card issuing authority, a payment parameter, a spending factor, and a fiscal parameter. The policy parameter comprises at least one of a regulatory norm provided by regulatory body, the transaction history, information specific to one or more services subscribed using the payment card. For example, regulatory norm provided by government, transaction history, personal loan on credit card payment, and how regular payments are made towards an account specific to credit card. The payment parameter comprises information specif the payment card and the user are obtained for at least one of the current month and one or more previous months.

In step 306, a credit limit adjustment score is computed based on the set of parameters and the unused credit limit. In step 308, the fixed credit limit is set to (or adjusted to) a credit limit for a succeeding month based on at least one of a portion of the unused credit limit, the set of parameters and the credit limit adjustment score. The credit limit for the succeeding month is greater than the fixed credit limit, in one example embodiment. The credit limit for the succeeding month is less than the fixed credit limit, in another example embodiment. The credit limit for the succeeding month is equal to the fixed credit limit, in yet another example embodiment.

The step of 306, computing of the credit limit adjustment score based on the set of parameters and the unused credit limit further comprises evaluating a transaction history of the payment card associated with the user. The method further comprises automatically identifying select payment cards from a group of payment cards associated with one or more users, determining an unused credit limit for a current month from the fixed credit limits of the payment cards, obtaining set of parameters (as described above), applying the set of parameters on the unused credit limit of the payment cards for the one or more users to compute corresponding one or more credit limit adjustment scores, applying a corresponding credit limit adjustment score (from the one or more credit limit adjustment scores) on select payment cards (or customers), and adjusting the fixed credit limit to a new credit limit for the succeeding month.

The embodiments of present disclosure herein addresses unresolved problem of managing credit limit for payment cards. In particular, the embodiments of present disclosure herein addresses unresolved problem of adjusting a credit limit to a new credit limit for a succeeding month based on an unused credit limit for a current month. The embodiments of the present disclosure evaluates the credit/debit patterns of the customers and enhance a portion of the unused credit limit basis predefined logic or technique as described above. This would allow the valued (or good) credit customers to spend more there by paying back in regular, since this would be a temporary credit limit increment. The payment card system 102 may implement (or implements) one or more rules that are configured basis the payback pattern of the customer which will serve as a primary (or major) criteria on arriving the calculation for the revision of the credit limit. In addition to the payback pattern, the payment card system 102 also considers the account details, customer details, spending patterns to arrive at the revision of credit limits.

The financial institutions fix the credit limit on product level. Typically, this is approximately calculated as sum of credit limits of all the credit cards issued by the issuing authority. This is essentially required to keep stock of clearance funds for the spending's executed by its customer for other financial institutions. At any point in time, the financial institution will be able to settle the clearances as part of financial payments. Most of the time the amount earmarked by the financial institution on the product level is not fully exhausted by the credit card holders. To use this amount for the benefit of good customers, the present disclosure and its embodiments provide a temporary credit limit. This limit would be revised as part of monthly billing only, thus making the revised limit available for the customer to spending until the next billing date. This temporary credit limit would allow more spending option to the card holder (e.g., one or more users) and the card holder will also try to ensure he/she does not default on the payments to enjoy enhanced credit limit thus encouraging a healthy and positive environment in credit card banking.

The payment card system 102 achieves this by choosing the right set of eligible customers' basis a computer assisted technique using the one or more parameters as criteria's, but are not limited to repayment factors, for example, repayment of total debit amount, repayment of minimum amount due, repayment of partial outstanding amount in a financial statement notified to the user, and so on. Other criteria include one or more customer factors: age, marital status, gender, residence area, yearly remuneration, job nature, company status, other product relationships, and so on. Further factors include account factors, for example, non-starter, account vintage, previous credit limit, delinquency, and so on. The payment card system 102 further considers policy factors, for example, various credit policy checks, and/or credit bureau (CIBIL) checks, etc., and market specific factors, for example, company profile, company rating, and/or business stability, etc., and other specific factors: spending factors, all other quantifiable factors, etc.

All the above (or subset of the above parameters/factors) parameters are utilized in framing the technique to arrive at the right set of customers (or identify select customers/payment cards) eligible for this credit increment. This credit increment is done based on a computer based component that would evaluate, select the eligible accounts and increase the temporary credit limit.

The written description describes the subject matter herein to enable any person skilled in the art to make and use the embodiments. The scope of the subject matter embodiments is defined by the claims and may include other modifications that occur to those skilled in the art. Such other modifications are intended to be within the scope of the claims if they have similar elements that do not differ from the literal language of the claims or if they include equivalent elements with insubstantial differences from the literal language of the claims.

It is, however to be understood that the scope of the protection is extended to such a program and in addition to a computer-readable means having a message therein; such computer-readable storage means contain program-code means for implementation of one or more steps of the method, when the program runs on a server or mobile device or any suitable programmable device. The hardware device can be any kind of device which can be programmed including e.g. any kind of computer like a server or a personal computer, or the like, or any combination thereof. The device may also include means which could be e.g. hardware means like e.g. an application-specific integrated circuit (ASIC), a field-programmable gate array (FPGA), or a combination of hardware and software means, e.g. an ASIC and an FPGA, or at least one microprocessor and at least one memory with software modules located therein. Thus, the means can include both hardware means and software means. The method embodiments described herein could be implemented in hardware and software. The device may also include software means. Alternatively, the embodiments may be implemented on different hardware devices, e.g. using a plurality of CPUs.

The embodiments herein can comprise hardware and software elements. The embodiments that are implemented in software include but are not limited to, firmware, resident software, microcode, etc. The functions performed by various modules described herein may be implemented in other modules or combinations of other modules. For the purposes of this description, a computer-usable or computer readable medium can be any apparatus that can comprise, store, communicate, propagate, or transport the program for use by or in connection with the instruction execution system, apparatus, or device.

The medium can be an electronic, magnetic, optical, electromagnetic, infrared, or semiconductor system (or apparatus or device) or a propagation medium. Examples of a computer-readable medium include a semiconductor or solid state memory, magnetic tape, a removable computer diskette, a random access memory (RAM), a read-only memory (ROM), a rigid magnetic disk and an optical disk. Current examples of optical disks include compact disk-read only memory (CD-ROM), compact disk-read/write (CD-R/W) and DVD.

A data processing system suitable for storing and/or executing program code will include at least one processor coupled directly or indirectly to memory elements through a system bus. The memory elements can include local memory employed during actual execution of the program code, bulk storage, and cache memories which provide temporary storage of at least some program code in order to reduce the number of times code must be retrieved from bulk storage during execution.

Input/output (I/O) devices (including but not limited to keyboards, displays, pointing devices, etc.) can be coupled to the system either directly or through intervening I/O controllers. Network adapters may also be coupled to the system to enable the data processing system to become coupled to other data processing systems or remote printers or storage devices through intervening private or public networks. Modems, cable modem and Ethernet cards are just a few of the currently available types of network adapters.

A representative hardware environment for practicing the embodiments may include a hardware configuration of an information handling/computer system in accordance with the embodiments herein. The system herein comprises at least one processor or central processing unit (CPU). The CPUs are interconnected via system bus to various devices such as a random access memory (RAM), read-only memory (ROM), and an input/output (I/O) adapter. The I/O adapter can connect to peripheral devices, such as disk units and tape drives, or other program storage devices that are readable by the system. The system can read the inventive instructions on the program storage devices and follow these instructions to execute the methodology of the embodiments herein.

The system further includes a user interface adapter that connects a keyboard, mouse, speaker, microphone, and/or other user interface devices such as a touch screen device (not shown) to the bus to gather user input. Additionally, a communication adapter connects the bus to a data processing network, and a display adapter connects the bus to a display device which may be embodied as an output device such as a monitor, printer, or transmitter, for example.

The preceding description has been presented with reference to various embodiments. Persons having ordinary skill in the art and technology to which this application pertains will appreciate that alterations and changes in the described structures and methods of operation can be practiced without meaningfully departing from the principle, spirit and scope.

## Claims

1. A computer implemented system, comprising:
a memory storing instructions; and
a processor coupled to said memory, wherein said processor is configured by the instructions to:
determine, during a billing period of a current month, an unused credit limit in a fixed credit limit for said current month; wherein said unused credit limit and said fixed credit limit are unique and specific to a payment card associated with a user,
obtain a set of parameters comprising information specific to said payment card and said user, wherein said specific information comprises at least one of an account parameter, a policy parameter provided by a payment card issuing authority, a payment parameter, a spending factor, and a fiscal parameter,
compute a credit limit adjustment score based on said set of parameters and said unused credit limit, and
set said fixed credit limit to a credit limit for a succeeding month based on at least one of a portion of said unused credit limit, said set of parameters and said credit limit adjustment score:

2. The computer implemented system of claim 1, wherein said credit limit adjustment score computed based on said set of parameters and said unused credit limit further comprises evaluating a transaction history of said payment card associated with said user.

3. The computer implemented system of claim 1, wherein said credit limit for said succeeding month is greater than said fixed credit limit.

4. The computer implemented system of claim 1, wherein said credit limit for said succeeding month is lesser than said fixed credit limit.

5. The computer implemented system of claim 2, wherein said account parameter comprises an account identifier that is unique and specific to said payment card, said transaction history of said payment card.

6. The computer implemented system of claim 1, wherein said information associated with said user comprises at least one of an age, an occupation, and a geographical location.

7. The computer implemented system of claim 2, wherein said policy parameter comprises at least one of a regulatory norm provided by regulatory body, said transaction history, information specific to one or more services subscribed using said payment card.

8. The computer implemented system of claim 1, wherein said payment parameter comprises information specific to said payment card and said user are obtained for at least one of said current month and one or more previous months.

9. The computer implemented system of claim 1, wherein said fixed credit limit is a credit limit that is determined during an issuance of said payment card.

10. A computer implemented method, comprising
determining, during a billing period of a current month, an unused credit limit in a fixed credit limit for said current month; wherein said unused credit limit and said fixed credit limit are unique and specific to a payment card associated with a user;
obtaining a set of parameters comprising information specific to said payment card and said user, wherein said information comprises at least one of an account parameter, a policy parameter provided by a payment card issuing authority, a payment parameter, a spending factor, and a fiscal parameter;
computing a credit limit adjustment score based on said set of parameters and said unused credit limit; and
setting said fixed credit limit to a credit limit for a succeeding month based on at least one of a portion of said unused credit limit, said set of parameters and said credit limit adjustment score.

11. The computer implemented method of claim 10, wherein said computing of said credit limit adjustment score based on said set of parameters and said unused credit limit further comprises evaluating a transaction history of said payment card associated with said user.

12. The computer implemented method of claim 10, wherein said credit limit for said succeeding month is greater than said fixed credit limit.

13. The computer implemented method of claim 10, wherein said credit limit for said succeeding month is less than said fixed credit limit.

14. The computer implemented method of claim 10, wherein said policy parameter comprises at least one of a regulatory norm provided by regulatory body, said transaction history, information specific to one or more services subscribed using said payment card.

15. The computer implemented method of claim 10, wherein said payment parameter comprises information specific said payment card and said user are obtained for at least one of said current month and one or more previous months.
